# EUROPÄISCHE PATENTSCHRIFT

(11) **EP 1 343 675 B1**
(45) Veröffentlichungstag und Bekanntmachung des Hinweises auf die Patenterteilung: **12.03.2008**
(21) Anmeldenummer: 01990557.9
(22) Anmeldetag: 13.12.2001
(51) Int. Cl.: B60T 17/00

(54) **ELEKTROMECHANISCHER BREMSAKTUATOR**
ELECTROMECHANICAL BRAKE ACTUATOR
ACTIONNEUR DE FREIN ELECTROMECANIQUE

(30) Priorität: 13.12.2000 DE 10061950
(43) Veröffentlichungstag der Anmeldung: 17.09.2003
(73) Patentinhaber: KNORR-BREMSE Systeme für Schienenfahrzeuge GmbH, 80809 München (DE)
(72) Erfinder: STALTMEIR, Josef, 80807 München (DE); WAGNER, Thomas, 81373 München (DE)
(86) Internationale Anmeldenummer: PCT/EP2001/014682
(87) Internationale Veröffentlichungsnummer: WO 2002/047953

(56) Entgegenhaltungen:
- EP-A- 0 166 156
- DE-A- 19 839 843
- DE-U- 8 910 805
- GB-A- 1 315 618
- US-A- 5 137 455
- US-A- 5 692 586
- US-A- 6 003 643

## Beschreibung

### Stand der Technik

Die Erfindung geht aus von einem elektromechanischen Bremsaktuator für eine Schienenfahrzeugbremse beinhaltend ein Aktuatorgehäuse sowie elektronische Komponenten wie beispielsweise Leistungs-, Steuerungselektronik oder Sensorik, wobei wenigstens einige der elektronischen Komponenten in einem separaten Elektronikgehäuse untergebracht sind, das mit dem Aktuatorgehäuse lösbar verbunden ist, nach der Gattung des Patentanspruchs 1. Ein solcher Bremsaktuator ist aus der US 5 692 586 bekannt.

Im wesentlichen werden derzeit im Schienenfahrzeugbereich drei Radbremssysteme eingesetzt: Pneumatische oder elektropneumatische Bremssysteme, hydraulische oder elektrohydraulische Bremssysteme sowie mechanische oder elektromechanische Bremssysteme. Das Radbremssystem kann dabei als aktives oder passives Bremssystem ausgeführt sein, je nachdem ob die Kraft eines Brems-aktuators zum Einbremsen (aktives Bremssystem) oder zum Lösen der Bremse (passives Bremssystem) aufgebracht werden muß. Für den Fall von Betriebsstörungen erfolgt bei pneumatischen Systemen eine Energiespeicherung in Druckluftbehältern, bei hydraulischen Systemen in Hydrobehältern und bei elektromechanischen Systemen in Form von Speicherfedern.

Bei elektromechanischen Bremsaktuatoren kommt als Betriebsbremseinrichtung ein elektromotorischer Antrieb zum Einsatz, welcher durch eine Regelungs- und Leistungselektronik zu schlupfgeregelten oder lastkorrigierten Bremsungen ansteuerbar ist. Wenn der Bremsaktuator zusammen mit den ihm zugeordneten Elektronikkomponenten als integrierter Bremsmodul am Drehgestell befestigt werden soll, ergibt sich das Problem, daß beispielsweise durch Schienen- oder Rangierstöße hervorgerufene Stoß- oder Schwingungsbelastungen zu Schädigungen der Elektronikkomponenten führen können. Darüber hinaus können die Elektronikkomponenten insbesondere bei hohen Umgebungstemperaturen einer Temperaturbelastung ausgesetzt sein, welche zu Störungen oder zum Totalausfall führt.

Der vorliegenden Erfindung liegt demgegenüber die Aufgabe zugrunde, einen elektromechanischen Bremsaktuator der eingangs erwähnten Art derart weiter zu entwickeln, daß seine elektronischen oder elektrischen Komponenten eine größere Zuverlässigkeit und Lebensdauer aufweisen.

Erfindungsgemäß wird diese Aufgabe durch die kennzeichnenden Merkmale von Anspruch 1 gelöst.

### Vorteile der Erfindung

Aufgrund der nachgiebigen, schwingungsdämpfenden Flanschverbindung zwischen dem Elektronikgehäuse und dem Aktuatorgehäuse sind die Elektronikkomponenten vom Körperschall des Aktuatorgehäuses schwingungsentkoppelt. Insbesondere werden dadurch die Eigenfrequenzen der Elektronikeinheit zu niedrigeren Werten verschoben, wodurch höherfrequente Anregungen keine Resonanzschwingungen mehr hervorrufen können. Darüber hinaus ergeben sich aufgrund des Energieverlustes in den Dämpfungselementen kleinere Schwingungsamplituden.

Dadurch, daß mit Ausnahme der Flanschverbindung zwischen dem Elektronikgehäuse und dem Aktuatorgehäuse ein lichter Abstand vorhanden ist, wird zwischen dem durch Betrieb des elektrischen Antriebs aufgeheizten Aktuatorgehäuse und dem Elektronikgehäuse das Vorhandensein einer isolierenden Luftschicht bzw. eines Kühlluftstroms ermöglicht, so daß die auf die Elektronikkomponenten wirkende thermische Belastung sinkt.

Durch die in den Unteransprüchen aufgeführten Maßnahmen sind vorteilhafte Weiterbildungen und Verbesserungen des im Patentanspruch 1 angegebenen elektromechanischen Bremsaktuators möglich.

Das schwingungsdämpfende Element wird vorzugsweise durch einen Gummiring gebildet, der dem Flansch des Aktuatorgehäuses und einem Flansch des Elektronikgehäuses zwischengeordnet ist. Infolgedessen befindet sich der Gummiring im Kraftfluß zwischen Aktuatorgehäuse und Elektronikgehäuse und entkoppelt Letzteres vom Aktuatorgehäuse.

Gemäß einer besonders zu bevorzugenden Maßnahme ist zumindest ein Teil der elektronischen Komponenten auf wenigstens einer Platine angeordnet, die innerhalb des Elektronikgehäuses durch wenigstens ein weiteres schwingungsdämpfendes Elemente aufgenommen ist. Durch diese Maßnahme ergibt sich eine zusätzliche Schwingungsentkoppelung der Elektronikkomponenten vom körperschallführenden Aktuatorgehäuse bzw. auch vom Elektronikgehäuse.

Vorzugsweise ist ein dem Elektronikgehäuse oder dem Aktuatorgehäuse zugeordneter Stecker oder eine dem Elektronikgehäuse oder dem Aktuatorgehäuse zugeordnete Buchse am Aktuatorgehäuse oder am Elektronikgehäuse ebenfalls schwingungsgedämpft befestigt. Infolgedessen können im Stecker-/Buchsenbereich keine steifen, schwingungsübertragenden Brücken entstehen.

### Zeichnungen

Ein Ausführungsbeispiel der Erfindung ist in der Zeichnung dargestellt und in der nachfolgenden Beschreibung näher erläutert. Die einzige Figur zeigt eine Querschnittsdarstellung eines Bremsaktuators gemäß einer bevorzugten Ausführungsform der Erfindung.

### Beschreibung des Ausführungsbeispiels

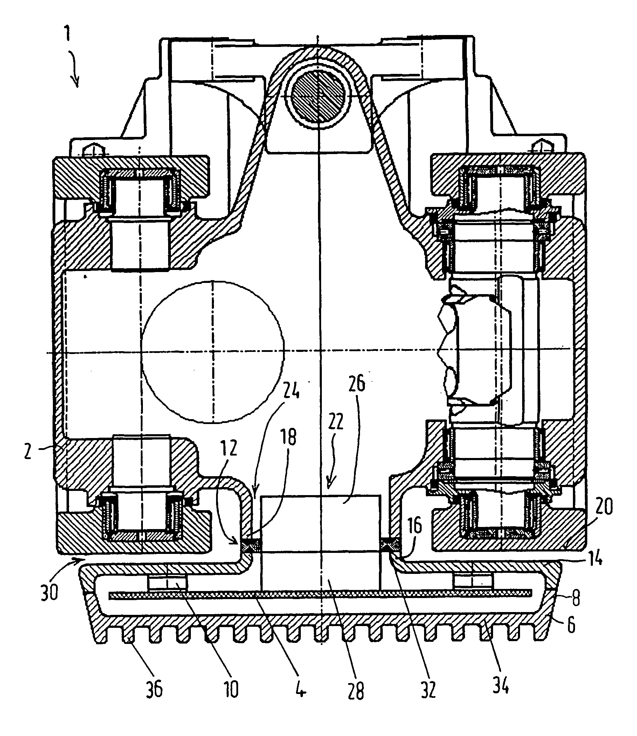

Die in Fig.1 insgesamt mit 1 bezeichnete und bevorzugte Ausführungsform eines elektromechanischen Bremsaktuators eines Schienenfahrzeugs beinhaltet einen aus Maßstabsgründen nicht dargestellten elektrischen Antrieb, beispielsweise einen elektrischen Stellmotor, der in einem Aktuatorgehäuse 2 untergebracht ist. Der Stellmotor versetzt eine ebenfalls nicht dargestellte Bremsspindel in Drehung, welche auf einen Kraftumsetzer wirkt, der die Drehbewegungen der Bremsspindel in eine Bremszuspannbewegung von Bremsbelägen in Richtung auf eine Wellenbremsscheibe wandelt. Das Aktuatorgehäuse 2 ist an einem Schwingungen ausgesetzten Drehgestell des Schienenfahrzeugs im Bereich der Wellenbremsscheibe gehalten.

Der Bremsaktuator 1 umfaßt elektrische oder elektronische Komponenten wie beispielsweise eine Regelungs- und Leistungselektronik zur Ansteuerung des Stellmotors. Von diesen elektrischen oder elektronischen Komponenten ist zumindest ein Teil auf einer Platine oder Leiterplatte 4 angeordnet, welche innerhalb eines separaten, aus zwei Halbschalen bestehenden Elektronikgehäuses 6 gehalten ist. Die Platine 4 hat nach allen Seiten Abstand zu einer Gehäusewandung 8 des Elektronikgehäuses 6 und ist mit dieser ausschließlich durch zapfenförmige Dämpfungselemente 10 verbunden, die vorzugsweise aus Gummi bestehen.

Das Elektronikgehäuse 6 ist vorzugsweise mittels einer Flanschverbindung 12 am Boden 20 des Aktuatorgehäuses 2 lösbar befestigt. Hierzu ist der oberen Gehäusewandung 14 des Elektronikgehäuses 6 ein nach oben gezogener, umlaufender Flansch 16 angeformt, der einem hierzu komplementären Flansch 18 des Aktuatorgehäuses 2 gegenüberliegt. Innerhalb der beiden Flansche 16, 18 verläuft eine Stecker-/Buchsenverbindung 22 aufnehmende Flanschöffnung 24, durch welche einander zugeordnete elektrische Kabel des Stellmotors und der durch die Platine 4 aufgenommenen Regelungs- und Leistungselektronik miteinander lösbar verbunden sind. Der Stecker 26 ist am Aktuatorgehäuse 2 schwingungsgedämpft befestigt, die Buchse 28 ist mit der ohnehin schwingsgedämpften Platine 4 verbunden und ragt derart weit von dieser nach oben, daß der Stecker 26 in der Buchse 28 zum Eingriff kommt, wenn das Elektronikgehäuse 6 an das Aktuatorgehäuse 2 angeflanscht wird.

Mit Ausnahme der Flanschverbindung 12 ist zwischen der oberen Gehäusewandung 14 des Elektronikgehäuses 6 und dem Boden 20 des Aktuatorgehäuses 2 ein lichter Abstand 30 vorhanden, in welchem Umgebungsluft zirkulieren kann. Den Stirnflächen der beiden Flansche 16, 18 ist ein beispielsweise aus einem elastischen Gummiring bestehendes Dämpfungselement 32 zwischengeordnet und durch geeignete Maßnahmen dort gehalten. Das Dämpfungselement 32 ist somit in den Kraftfluß zwischen Aktuatorgehäuse 2 und Elektronikgehäuse 6 einbezogen. Eine Überbrückung des elastischen Dämpfungselements 32 durch steife oder starre Verbindungselemente ist vorzugsweise nicht vorgesehen.

Das Elektronikgehäuse 6 ist an seiner vom Aktuatorgehäuse 2 weg weisenden Bodenwandung 34 mit Kühlrippen 36 versehen und außerdem in einem Bereich des Aktuatorgehäuses 2 angeordnet, welcher einem durch Betrieb des Schienenfahrzeugs hervorgerufenen Luftstrom wenigstens teilweise ausgesetzt ist.

### Bezugszahlenliste

- 1: Bremsaktuator
- 2: Aktuatorgehäuse
- 4: Platine
- 6: Elektronikgehäuse
- 8: Gehäusewandung
- 10: Dämpfungselement
- 12: Flanschverbindung
- 14: obere Gehäusewandung
- 16: Flansch Elektronikgehäuse
- 18: Flansch Aktuatorgehäuse
- 20: Aktuatorgehäuseboden
- 22: Stecker-/Buchsenverbindung
- 24: Flanschöffnung
- 26: Stecker
- 28: Buchse
- 30: Abstand
- 32: Dämpfungselement
- 34: Elektronikgehäuseboden
- 36: Kühlrippen.

## Patentansprüche

1. Elektromechanischer Bremsaktuator (1) für eine Schienenfahrzeugbremse beinhaltend ein Aktuatorgehäuse (2) sowie elektronische Komponenten wie beispielsweise Leistungs-, Steuerungselektronik oder Sensorik, wobei wenigstens einige der elektronischen Komponenten in einem separaten Elektronikgehäuse (6) untergebracht sind, das mit dem Aktuatorgehäuse (2) lösbar verbunden ist, **dadurch gekennzeichnet, daß** die Verbindung wenigstens ein schwingungsdämpfendes Element (32) aufweist, das einem Flansch (18) des Aktuatorgehäuses (2) und einem Flansch (16) des Elektronikgehäuses (6) zwischengeordnet ist, und daß mit Ausnahme der Flanschverbindung (12) zwischen dem Elektronikgehäuse (6) und dem Aktuatorgehäuse (2) ein lichter Abstand (30) vorhanden ist.

2. Elektromechanischer Bremsaktuator nach Anspruch 1, **dadurch gekennzeichnet, daß** zumindest ein Teil der elektronischen Komponenten auf wenigstens einer Platine (4) angeordnet ist, die innerhalb des Elektronikgehäuses (6) durch wenigstens ein weiteres schwingungsdämpfendes Element (10) aufgenommen ist.

3. Elektromechanischer Bremsaktuator nach Anspruch 1 oder 2, **dadurch gekennzeichnet, daß** die schwingungsdämpfenden Elemente (10, 32) vorzugsweise Gummi- oder Federlemente sind.

4. Elektromechanischer Bremsaktuator nach Anspruch 3, **dadurch gekennzeichnet, daß** das schwingungsdämpfende Element zwischen dem Flansch (18) des Aktuatorgehäuses (2) und dem Flansch (16) des Elektronikgehäuses (6) durch einen Gummiring (32) gebildet wird.

5. Elektromechanischer Bremsaktuator nach Anspruch 4, **dadurch gekennzeichnet, daß** in einer Flanschöffnung (24) eine Stecker-/Buchsenverbindung (22) angeordnet ist.

6. Elektromechanischer Bremsaktuator nach Anspruch 5, **dadurch gekennzeichnet, daß** ein dem Elektronikgehäuse (6) oder dem Aktuatorgehäuse (2) zugeordneter Stecker (26) oder eine dem Elektronikgehäuse (6) oder dem Aktuatorgehäuse (2) zugeordnete Buchse am Aktuatorgehäuse (2) oder am Elektronikgehäuse (6) ebenfalls schwingungsgedämpft befestigt ist.

7. Elektromechanischer Bremsaktuator nach einem der vorhergehenden Ansprüche,**dadurch gekennzeichnet, daß** das Elektronikgehäuse (6) zumindest auf der vom Aktuatorgehäuse (2) weg weisenden Seite mit Kühlrippen (36) versehen ist.

8. Elektromechanischer Bremsaktuator nach einem der vorhergehenden Ansprüche, **dadurch gekennzeichnet, daß** das Elektronikgehäuse (6) in einem Bereich des Aktuatorgehäuses (2) angeordnet ist, welcher einem durch Betrieb des Schienenfahrzeugs hervorgerufenen Luftstrom wenigstens teilweise ausgesetzt ist.

## Claims

1. Electromechanical brake actuator (1) for a rail vehicle brake, comprising an actuator housing (2) as well as electronic components such as electronic power, electronic control or sensor systems, wherein at least some of said electronic components are accommodated in a separate electronic-system housing (6) that is releasably connected to said actuator housing (2), **characterised in that** the connection includes at least one vibration-dampening element (32) interposed between a flange (18) of said actuator housing (2) and a flange (16) of said electronic-system housing (6), and that an internal distance (30) is provided, with the exception of said flange connection (12) between said electronic-system housing (6) and said actuator housing (2).

2. Electromechanical brake actuator according to Claim 1, **characterised in that** at least one part of said electronic components is disposed on at least one board (4) that is received by at least one further vibration-dampening element (10) within said electronic-system housing (6).

3. Electromechanical brake actuator according to Claim 1 or 2, **characterised in that** said vibration-dampening elements (10, 32) are preferably rubber or spring elements.

4. Electromechanical brake actuator according to Claim 3, **characterised in that** said vibration-dampening element is formed by a rubber ring (32) between said flange (18) of said actuator housing (2) and said flange (16) of said electronic-system housing (6).

5. Electromechanical brake actuator according to Claim 4, **characterised in that** a plug/socket connector (22) is disposed in a flange aperture (24).

6. Electromechanical brake actuator according to Claim 5, **characterised in that** a plug (26) associated with said electronic-system housing (6) or said actuator housing (2) or a socket associated with said electronic-system housing (6) or said actuator housing (2) is equally fastened on said actuator housing (2) or on said electronic-system housing (6) such that vibrations are dampened.

7. Electromechanical brake actuator according to any of the preceding Claims, **characterised in that** said electronic-system housing (6) is provided with cooling fins (36) at least on the side turned away from said actuator housing (2).

8. Electromechanical brake actuator according to any of the preceding Claims, **characterised in that** said electronic-system housing (6) is disposed in a region of said actuator housing (2), which is exposed, at least partly, to the air flow created by the operation of the rail vehicle.

## Revendications

1. Actionneur de frein électromécanique (1) du frein d'un véhicule sur rails, comprenant un carter de l'actionneur (2) ainsi que des composants électroniques comme des systèmes électroniques de puissance, de commande ou des capteurs, dans lequel au moins quelques-uns desdits composants électroniques sont implantés dans un carter de l'équipement électronique (6) séparé, qui est relié, de façon détachable, audit carter de l'actionneur (2), **caractérisé en ce que** la connexion renferme au moins un élément amortisseur de vibrations (32) interposé entre une patte (18) dudit carter de l'actionneur (2) et une patte (16) dudit carter de l'équipement électronique (6), et **en ce qu'**un écart intérieur (30) est formé, à l'exception de ladite connexion par pattes (12) entre ledit carter de l'équipement électronique (6) et ledit carter de l'actionneur (2).

2. Actionneur de frein électromécanique selon la revendication 1, **caractérisé en ce qu'**au moins une partie desdits composants électroniques est disposée à au moins une platine (4), qui est reçue par au moins une autre élément amortisseur de vibrations additionnel (10) à l'intérieur dudit carter de l'équipement électronique (6).

3. Actionneur de frein électromécanique selon la revendication 1 ou 2, **caractérisé en ce que** lesdits éléments amortisseurs de vibrations (10, 32) sont des éléments en caoutchouc ou à ressort, de préférence.

4. Actionneur de frein électromécanique selon la revendication 3, **caractérisé en ce que** ledit élément amortisseur de vibrations est constitué par un anneau en caoutchouc (32) entre ladite patte (18) dudit carter de l'actionneur (2) et ladite patte (16) dudit carter de l'équipement électronique (6).

5. Actionneur de frein électromécanique selon la revendication 4, **caractérisé en ce qu'**un connecteur à fiche/douille (22) est disposé dans une ouverture (24) de patte.

6. Actionneur de frein électromécanique selon la revendication 5, **caractérisé en ce qu'**une fiche mâle (26) affectée audit carter de l'équipement électronique (6) ou audit carter de l'actionneur (2) ou une douille affectée audit carter de l'équipement électronique (6) ou audit carter de l'actionneur (2) est également montée audit carter de l'actionneur (2) ou audit carter de l'équipement électronique (6) de façon à amortir des vibrations.

7. Actionneur de frein électromécanique selon une quelconque des revendications précédentes, **caractérisé en ce que** ledit carter de l'équipement électronique (6) est pourvu des ailettes de refroidissement (36) au moins du côté opposé audit carter de l'actionneur (2).

8. Actionneur de frein électromécanique selon une quelconque des revendications précédentes, **caractérisé en ce que** ledit carter de l'équipement électronique (6) est disposé dans une zone dudit carter de l'actionneur (2), qui est exposé, au moins en partie, au courant d'air engendré par l'opération du véhicule sur rails.
